# EUROPEAN PATENT APPLICATION

(11) **EP 4 701 204 A1**
(43) Date of publication of application: **25.02.2026**
(21) Application number: 23936480.5
(22) Date of filing: 20.12.2023
(51) Int. Cl.: H04N 21/43

(54) **VIDEO STREAM SYNCHRONIZATION METHOD AND APPARATUS, PLATFORM, AND STORAGE MEDIUM**

(30) Priority: 11.05.2023 CN 202310529739
(71) Applicant: Zhejiang Uniview Technologies Co., Ltd., Hangzhou, Zhejiang 310051 (CN)
(72) Inventor: WANG, Xingan, Hangzhou, Zhejiang 310051 (CN); YUAN, Yuguang, Hangzhou, Zhejiang 310051 (CN)
(74) Representative: HGF
(86) International application number: PCT/CN2023/140139
(87) International publication number: WO 2024/230176

(57) **Abstract**

A video stream synchronization method, apparatus, and platform, and a computer-readable storage medium. The video stream synchronization method comprises the following: an input node transmits at least two video blocks generated by segmenting a video frame and a message packet to output nodes corresponding to at least two video blocks, respectively, and sends the message packet to a frame synchronization control module in response to a completed transmission of the at least two video blocks and the message packet; the frame synchronization control module processes an initial frame synchronization signal according to a first video identification and a first frame number identification in the message packet to generate a target frame synchronization signal, and sends the target frame synchronization signal to the output nodes corresponding to the at least two video blocks respectively; each of the output nodes parses the target frame synchronization signal to determine a second video identification and a second frame number identification, and sends a video block corresponding to the first frame number identification to a display device when the first video identification is the same as the second video identification, and the first frame number identification is the same as the second frame number identification.

## Description

This application claims priority to Chinese Patent Application No. 202310529739.0 filed with the China National Intellectual Property Administration on May 11, 2023, the disclosure of which is incorporated herein by reference in its entirety.

### TECHNICAL FIELD

The present disclosure relates to the field of video processing, for example, to a video stream synchronization method, apparatus, and platform, and a computer-readable storage medium.

### BACKGROUND

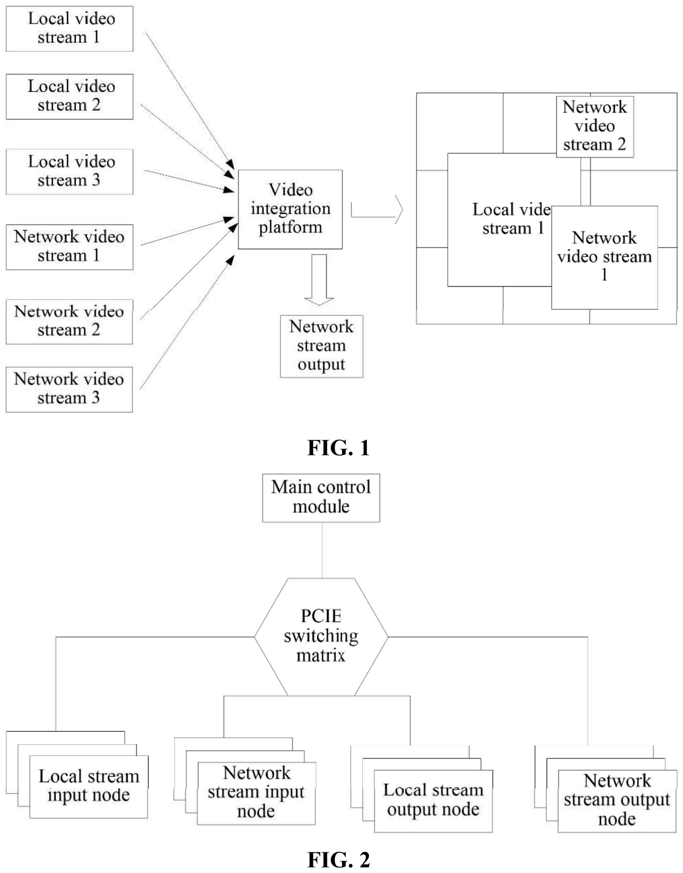

FIG. 1 is a functional schematic block diagram of a simple video integration platform provided by the related art. As shown in FIG. 1, the video integration platform can receive local video streams and network video streams, and perform processing such as segmenting, splicing, scaling and overlaying on the input multiple video streams. The video integration platform can output processed video images through a local video output interface, or send the entire video images as a network stream. A complex video integration platform can simultaneously input and output dozens or even hundreds of video streams.

FIG. 2 is a schematic diagram of a framework of a video integration platform provided by the related art. As shown in FIG. 2, the video integration platform includes local stream input nodes, local stream output nodes, network stream input nodes and network stream output nodes. The local stream input nodes are responsible for operations such as segmenting and overlaying on the local video streams, and send the processed video streams to the local stream output nodes for display or to the network stream output nodes for coding and sending. The network stream input nodes are responsible for decoding the network video streams into the local video streams and then sending the local video streams to the local stream output nodes for display. The local stream output nodes send the local video streams sent by the local stream input nodes and the network stream input nodes through the video output interface. The network stream output nodes encode the local video streams sent by the local stream input nodes and send the coded local video streams. All these nodes are connected via a bus matrix, such as a high-speed peripheral component interconnect express (PCIE) bus.

The local video streams refer to videos transmitted through common video interfaces and related cables. The common video interfaces include the video graphics array (VGA) interface, the display port (DP), and the high definition multimedia interface (HDMI), etc. The local video streams feature a stable transmission frame rate, uncompressed or slightly compressed video data, a high data bandwidth, low latency, and a short transmission distance. The network video streams refer to video streams that are subjected to deep image compression and transmitted through a network path. Common video compression methods include H.264 and H.265, which feature a high video compression rate, a low data bandwidth, an unstable frame rate, high latency, and are suitable for long-distance transmission.

Before a network video stream is displayed through the video interface, it needs to be decoded and converted into a local video stream. The local video stream needs to be encoded when it is converted into a network video stream. Mainstream chip platforms, such as a central processing unit (CPU), a digital signal processor (DSP) and a graphics processing unit (GPU), include encoding and decoding capabilities, and can process the network video stream and local video stream data. However, field programmable gate array (FPGA) devices lack encoding and decoding capabilities and can only process the local video streams, but not the network video streams. The video integration platform needs to process the local video streams and the network video streams to achieve image synchronization playback. However, since the local video streams and the network video streams are processed in different ways, special consideration is required to maintain the image synchronization in the case where the image is segmented and then output from different video output interfaces.

### SUMMARY

The present disclosure provides a video stream synchronization method, apparatus, and platform, and a computer-readable storage medium to avoid the sense of fragmentation when a display device displays a video image generated by splicing video blocks received from multiple output nodes, thereby realizing the video stream synchronization.

According to an aspect of the present disclosure, a video stream synchronization method is provided and applied to a video stream synchronization platform. The video stream synchronization platform includes a main control module, a frame synchronization control module, an input node and output nodes. The video stream synchronization method includes the following:

For each video frame in a video stream, the input node segments a current video frame to generate at least two video blocks.

For each of the at least two video blocks, the input node transmits a current video block to an output node corresponding to the current video block. In response to a completed transmission of the current video block, the input node sends a message packet to the output node corresponding to the current video block. The at least two video blocks have one-to-one correspondence with at least two of the output nodes. The message packet includes a first video identification of the current video frame and a first frame number identification of the current video block. Multiple video frames in the same video stream have the same first video identification. At least two video blocks generated by segmenting the same video frame have the same first video frame number identification.

In response to a completed transmission of the at least two video blocks generated by segmenting the same video frame and the message packet, the input node sends the message packet to the frame synchronization control module through the main control module.

In response to the message packet, the frame synchronization control module processes an initial frame synchronization signal according to the first video identification and the first frame number identification in the message packet, generates a target frame synchronization signal, and sends the target frame synchronization signal to the output nodes corresponding to the at least two video blocks respectively.

For each of the output nodes, a current output node parses the target frame synchronization signal to determine a second video identification and a second frame number identification. When the first video identification is the same as the second video identification and the first frame number identification is the same as the second frame number identification, the current output node sends a video block corresponding to the first frame number identification in the current output node to a display device.

According to another aspect of the present disclosure, a video stream synchronization apparatus is provided and applied to a video stream synchronization platform. The video stream synchronization platform includes a main control module, a frame synchronization control module, an input node and output nodes. The video stream synchronization apparatus includes a video frame segmenting unit, a video block transmission unit, a message packet sending unit, a frame synchronization signal generation unit, and a first video block sending unit.

The video frame segmenting unit is configured to, for each video frame in a video stream, segment a current video frame to generate at least two video blocks through the input node.

The video block transmission unit is configured to, for each of the at least two video blocks, transmit a current video block to an output node corresponding to the current video block through the input node, and in response to a completed transmission of the current video block, send a message packet to the output node corresponding to the current video block. The at least two video blocks have one-to-one correspondence with at least two of the output nodes. The message packet includes a first video identification of the current video frame and a first frame number identification of the current video block. Multiple video frames in the same video stream have the same first video identification, and at least two video blocks generated by segmenting the same video frame have the same first video frame number identification.

The message packet sending unit is configured to send, through the input node, the message packet to the frame synchronization control module by using the main control module in response to a completed transmission of the at least two video blocks generated by segmenting the same video frame and the message packet.

The frame synchronization signal generation unit is configured to process an initial frame synchronization signal according to the first video identification and the first frame number identification in the message packet to generate a target frame synchronization signal through the frame synchronization control module in response to the message packet, and send the target frame synchronization signal to the output nodes corresponding to the at least two video blocks respectively.

The first video block sending unit is configured to, for each of the output nodes, parse the target frame synchronization signal to determine a second video identification and a second frame number identification through a current output node, and send a video block corresponding to the first frame number identification in the current output node to a display device when the first video identification is the same as the second video identification and the first frame number identification is the same as the second frame number identification.

According to another aspect of the present disclosure, a video stream synchronization platform is provided and includes a main control module, a frame synchronization control module, an input node and output nodes.

The input node is configured to, for each video frame in a video stream, segment the current video frame to generate at least two video blocks.

The input node is further configured to, for each of the at least two video blocks, transmit a current video block to an output node corresponding to the current video block, and in response to a completed transmission of the current video block, send a message packet to the output node corresponding to the current video block. The at least two video blocks have one-to-one correspondence with at least two of the output nodes. The message packet includes a first video identification of the current video frame and a first frame number identification of the current video block. Multiple video frames in the same video stream have the same first video identification, and at least two video blocks generated by segmenting the same video frame have the same first video frame number identification.

The input node is further configured to send the message packet to the frame synchronization control module through the main control module in response to a completed transmission of the at least two video blocks generated by segmenting the same video frame and the message packet.

The frame synchronization control module is configured to, in response to the message packet, process an initial frame synchronization signal according to the first video identification and the first frame number identification in the message packet, generate a target frame synchronization signal, and send the target frame synchronization signal to the output nodes corresponding to the at least two video blocks respectively.

For each of the output nodes, the current output node parses the target frame synchronization signal to determine a second video identification and a second frame number identification, and sends a video block corresponding to the first frame number identification in the current output node to a display device when the first video identification is the same as the second video identification and the first frame number identification is the same as the second frame number identification.

According to another aspect of the present disclosure, a computer-readable storage medium is provided. The computer-readable storage medium stores computer instructions, and when being executed by a processor, the computer instructions are configured to enable the processor to implement the video stream synchronization method according to any embodiment of the present disclosure.

### BRIEF DESCRIPTION OF DRAWINGS

FIG. 1 is a functional schematic block diagram of a simple video integration platform provided by the related art.
FIG. 2 is a schematic diagram of a framework of a video integration platform provided by the related art.
FIG. 3A is a diagram illustrating the effect of video stream synchronization based on a frame synchronization signal.
FIG. 3B is another diagram illustrating the effect of video stream synchronization based on a frame synchronization signal.
FIG. 4 is a flowchart of a video stream synchronization method provided in embodiment one of the present disclosure.
FIG. 5 is a schematic structural diagram of a video stream synchronization platform provided by an embodiment of the present disclosure.
FIG. 6 is a schematic diagram of a target frame synchronization signal provided by an embodiment of the present disclosure.
FIG. 7 is a schematic diagram of a video stream synchronization process provided by an embodiment of the present disclosure.
FIG. 8 is a schematic structural diagram of a video stream synchronization platform provided by an embodiment of the present disclosure.
FIG. 9 is a schematic structural diagram of a video stream synchronization apparatus provided in embodiment two of the present disclosure.

### DETAILED DESCRIPTION

The technical solutions in the embodiments of the present disclosure are described hereinafter in conjunction with the drawings in the embodiments of the present disclosure. The embodiments described herein are only part of the embodiments of the present disclosure, but not all of the embodiments.

The terms "first" and "second" in the description, claims and the above drawings of the present disclosure are used to distinguish similar objects, and are not necessarily used to describe a specific order or sequence. The numbers used in this way may be interchanged where appropriate, so that the embodiments of the present disclosure described herein may be implemented in an order other than those illustrated or described herein. Furthermore, the terms "including" and "comprising" and any variations thereof are intended to cover non-exclusive inclusion, for example, a process, method, system, product or device that includes a series of steps or elements is not necessarily limited to those steps or elements listed, but may include other steps or elements not listed or inherent to such process, method, product or device.

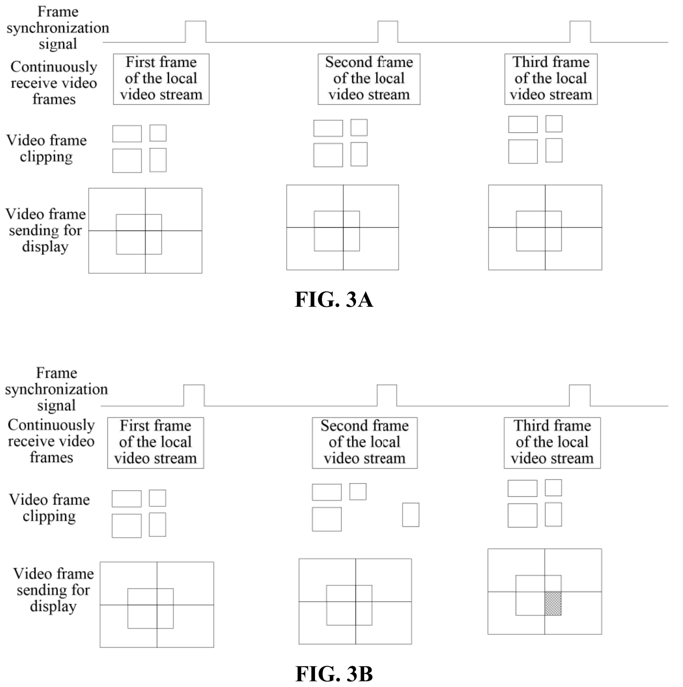

In the related art, the following two solutions are used to achieve video stream synchronization output: solution one is video stream synchronization based on the frame synchronization signal, and solution two is video stream synchronization based on the timestamp. Solution one requires high real-time performance of the processing devices for local video streams and network video streams, and requires all video stream operations to be completed within pulse intervals of the frame synchronization signal. However, typical processing devices lack high real-time performance and are prone to being interrupted and blocked by unexpected tasks. FIG. 3A is a diagram illustrating the effect of video stream synchronization based on a frame synchronization signal. As shown in FIG. 3A, when the second frame of a video stream is received, the first frame of the video stream is displayed, and when the third frame of the video stream is received, the second frame of the video stream is displayed. A decoding operation is added for processing the network video stream. In this case, due to the non-real-time operation of the device, asynchronization exists once the processing of one network video stream is segmented by the frame synchronization signal. FIG. 3B is another diagram illustrating the effect of video stream synchronization based on a frame synchronization signal. As shown in FIG. 3B, the processing of the second frame of the video stream is segmented by the frame synchronization signal, resulting in the fragmentation of the second frame of the video stream when the second frame of the video stream is displayed. To solve the technical problems existing in solution one, the network video stream is converted into a local video stream first, and then the converted local video stream is processed by using an FPGA device to ensure the real-time display of the video stream, while the disadvantages are increased costs and higher latency. Solution two uses the timestamp to achieve video stream synchronization. However, the problem is not fundamentally solved, and solution two simply does not rely on external frame synchronization signals. Moreover, the use of the timestamp by different devices is complicated.

### Embodiment one

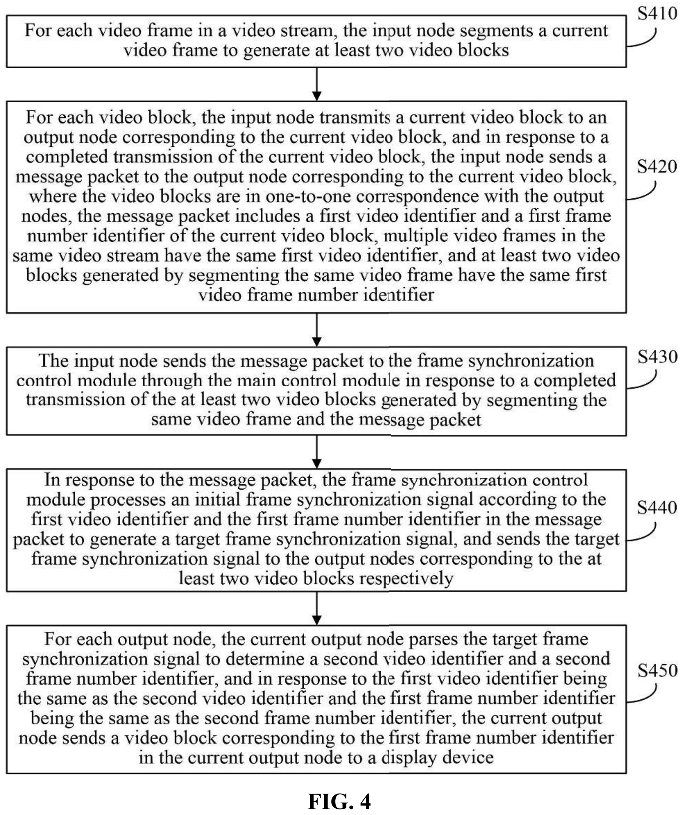

FIG. 4 is a flowchart of a video stream synchronization method according to embodiment one of the present disclosure. The present embodiment is applicable to the case where the video streams are synchronized. The video stream synchronization method may be performed by a video stream synchronization apparatus. The video stream synchronization apparatus may be implemented in the form of hardware and/or software and may be configured in a video stream synchronization platform. The video stream synchronization platform includes a main control module, a frame synchronization control module, an input node and output nodes. As shown in FIG. 4, the video stream synchronization method includes the following steps.

In S410, for each video frame in a video stream, the input node segments a current video frame to generate at least two video blocks.

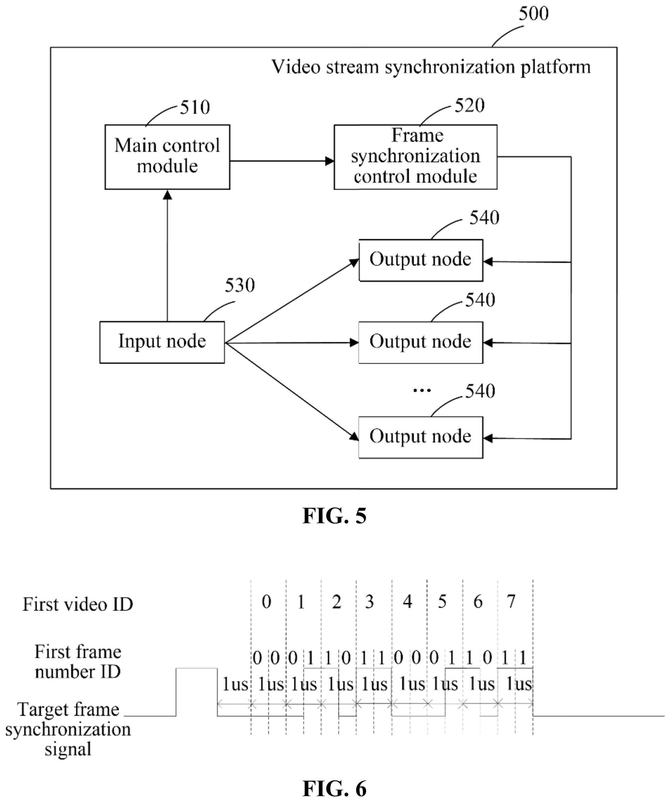

FIG. 5 is a schematic structural diagram of a video stream synchronization platform provided by an embodiment of the present disclosure. As shown in FIG. 5, the video stream synchronization platform 500 includes a main control module 510, a frame synchronization control module 520, an input node 530 and output nodes 540. Optionally, the input node includes a local stream input node and a network stream input node, and the output node includes a local stream output node. One or more local stream input nodes and one or more network stream input nodes may be provided. Multiple output nodes are provided. The local stream input node may be implemented by using devices with high real-time performance (such as an FPGA), and the network stream input node may be implemented by using devices with low real-time performance (such as CPU, DSP or GPU).

In an embodiment of the present disclosure, the input node receives a video stream. When the input node is a local stream input node, the local stream input node receives the video stream (referred to as a local video stream) through a common video interface and a related cable. When the input node is a network stream input node, the network stream input node receives the video stream (referred to as a network video stream) subjected to deep image compression and transmitted through a network path and decodes the network video stream. Each video stream includes multiple video frames. For each video frame in the video stream, the input node segments the current video frame to generate at least two video blocks corresponding to the current video frame. The video frame may be segmented based on a preset segmenting algorithm; alternatively, the video frame may be randomly segmented. The segmenting manner of the video frame is not limited in the embodiments of the present disclosure.

In S420, for each video block, the input node transmits a current video block to an output node corresponding to the current video block, and when transmission of the current video block is completed, the input node sends a message packet to the output node corresponding to the current video block. The video blocks are in one-to-one correspondence with the output nodes. The message packet includes a first video identification of the current video frame and a first frame number identification of the current video block. Multiple video frames in the same video stream have the same first video identification, and at least two video blocks generated by segmenting the same video frame have the same first video frame number identification.

In an embodiment of the present disclosure, for each video frame in the video stream, the input node transmits the at least two video blocks corresponding to the current video frame to the output nodes respectively corresponding to the at least two video blocks. The at least two video blocks have one-to-one correspondence with at least two output nodes. Exemplarily, at least two output nodes having a mapping relationship with the input node are determined, and the output nodes having the mapping relationship with the input node are output nodes for receiving the video stream output by the input node. At least two video blocks generated by segmenting the video frame are sent to the respective output nodes corresponding to the at least two video blocks having the mapping relationship with the input node. The quantity of the output nodes having the mapping relationship with the input node is the same as the quantity of the video blocks generated by segmenting the video frame, and the output nodes are in one-to-one correspondence with the video blocks.

When the input node transmits one video block to the output node corresponding to the video block, i.e., when it is determined that one video block is successfully transmitted to the output node corresponding to the video block, the input node sends the message packet to the output node corresponding to the video block. The message packet includes the first video identification of the video frame that generates the video block and the first frame number identification of the video block. The first video identification is a video stream identification before the video frame is segmented, and the first frame number identification is an identifier of the video blocks after the video frame is segmented. Multiple video frames in the same video stream have the same first video identification, and at least two video blocks generated by segmenting the same video frame have the same first video frame number identification. Therefore, the message packets received by the output nodes corresponding to the at least two video blocks generated by segmenting the video frame are the same, and each message packet includes the same first video identification and the same first frame number identification.

In an embodiment of the present disclosure, multiple video frames in the same video stream have the same first video identification. The first video identification may be the first video identifier (ID). The first frame number identifications of multiple video frames in the video stream may be first frame number identifiers (IDs). The first frame number IDs are IDs cyclically counted by a loop counter, and the first frame number IDs are sequentially and cyclically counted according to the sequence of the video frames in the video stream. For example, the first frame number ID may be an ID counted by a 2-bit loop counter, and the first frame number IDs of the video frames continuously change cyclically as the quantity of the video frames in the video stream increases.

In S430, the input node sends the message packet to the frame synchronization control module by using the main control module when transmission of the at least two video blocks generated by segmenting the same video frame and the message packet is completed.

Since sizes of the at least two video blocks generated by segmenting the video frame may be different, and the input node transmits the at least two video blocks to the output nodes corresponding to the at least two video blocks at different transmission speeds, the time points when the input node transmits the at least two video blocks and the message packet to the output nodes corresponding to the at least two video blocks are not necessarily the same. When it is determined that the at least two video blocks generated by segmenting the same video frame and the message packet are transmitted to the output nodes corresponding to the at least two video blocks, the input node sends the message packet corresponding to the video frame to the main control module. When the main control module receives the message packet, it is determined that the input node completes the transmission of the at least two video blocks generated by segmenting the video frame corresponding to the message packet to the output nodes corresponding to the at least two video blocks. At this time, the main control module sends the message packet to the frame synchronization control module.

In S440, in response to the message packet, the frame synchronization control module processes an initial frame synchronization signal according to the first video identification and the first frame number identification in the message packet to generate a target frame synchronization signal, and sends the target frame synchronization signal to the output nodes corresponding to the at least two video blocks separately.

When the frame synchronization control module receives the message packet sent by the main control module, the initial frame synchronization signal is encoded according to the first video identification and the first frame number identification in the message packet, and the coded initial frame synchronization signal is taken as the target frame synchronization signal. The initial frame synchronization signal is a pulse signal with a fixed period, such as a high-level pulse with a fixed period (the high-level pulse signal with a fixed frame rate). The common video stream is 60 frames of video; in this case, the frame pulse period of the initial frame synchronization signal is 16.67 ms. The target frame synchronization signal is a pulse signal with an irregular period.

Optionally, the first video identification includes the first video ID. The step in which the frame synchronization control module processes the initial frame synchronization signal according to the first video identification and the first frame number identification in the message packet to generate the target frame synchronization signal includes the following: after a preset duration delayed from a falling edge of the initial frame synchronization signal, based on a preset sequence of the first video ID, the frame synchronization control module sends a target pulse signal corresponding to the first frame number identification to the initial frame synchronization signal according to the first frame number identification corresponding to the first video ID within a preset period to generate the target frame synchronization signal.

The preset sequence of the first video ID may be a sequence of the first video ID from small to large, or a sequence of the first video ID from large to small, and the preset sequence is not limited in the embodiments of the present disclosure. In an embodiment of the present disclosure, according to the sequence of the first video ID from small to large, that is, according to the sequence of the video streams, within the preset duration (i.e., a fixed delay time) delayed from the falling edge of the initial frame synchronization signal, the pulse signal, with a fixed time as a period, corresponding to the first frame number identification is sent to the initial frame synchronization signal according to the first frame number identification corresponding to the first video ID to generate the target frame synchronization signal. Exemplarily, FIG. 6 is a schematic diagram of a target frame synchronization signal provided by an embodiment of the present disclosure. As shown in FIG. 6, taking the preset duration of 1 us as an example, after the duration of 1 us delayed from the falling edge of the initial frame synchronization signal, a low-level pulse (considered as 0) of 500 ns or a high-level pulse (considered as 1) of 500 ns is continuously sent, and each pulse signal of 1 us may be taken as the first frame number identification (such as the first frame number ID) corresponding to the first video ID. For example, a video stream is 8-bit, then the matching pulse signal is continuously sent to the initial frame synchronization signal for 256 us to generate the target frame synchronization signal corresponding to the video stream. As shown in FIG. 6, after 1 us delayed from the falling edge of the initial frame synchronization signal, (taking 500 ns as one period to count) the high-level pulse signal and the low-level pulse signal continuously transmitted are as follows: low, low (the first frame number ID corresponding to the first video ID of 0 is 00), low, high (the first frame number ID corresponding to the first video ID of 1 is 1), high, low (the first frame number ID corresponding to the first video ID of 2 is 2), high, high (the first frame number ID corresponding to the first video ID of 3 is 3), low, low (the first frame number ID corresponding to the first video ID of 4 is 00), and so on.

The frame synchronization control module sends the target frame synchronization signal separately to the output nodes corresponding to the at least two video blocks generated by segmenting the video frame. The video frames in the video stream are continuously transmitted over time, and the generated target frame synchronization signals are constantly updated. Therefore, the target frame synchronization signals sent by the frame synchronization control module at different time points may not be the same.

In S450, for each output node, the current output node parses the target frame synchronization signal to determine a second video identification and a second frame number identification, and when the first video identification is the same as the second video identification and the first frame number identification is the same as the second frame number identification, a video block corresponding to the first frame number identification in the current output node is sent to a display device.

In the embodiments of the present disclosure, the output nodes corresponding to the at least two video blocks respectively receive the target frame synchronization signal sent by the frame synchronization control module, and parse the target frame synchronization signal to parse the second video identification and the second frame number identification from the target frame synchronization signal. Exemplarily, the second video identification and the second frame number identification may be parsed from the target frame synchronization signal by using a reverse procedure of encoding the initial frame synchronization signal according to the first video identification and the first frame number identification. Exemplarily, the second video identification and the second frame number identification are determined by parsing the target frame synchronization signal according to the characteristics of the initial frame synchronization signal and the target frame synchronization signal (the initial frame synchronization signal is a pulse signal with a fixed period, while the target frame synchronization signal is a pulse signal with an irregular period). Optionally, each output node may also receive the initial frame synchronization signal and the target frame synchronization signal sent by the frame synchronization control module, compare and analyze the initial frame synchronization signal and the target frame synchronization signal, and thus parse the second video identification and the second frame number identification from the target frame synchronization signal.

For the output node corresponding to each video block, each output node determines whether the second video identification parsed from the target frame synchronization signal is the same as the first video identification received from the input node, and whether the second frame number identification parsed from the target frame synchronization signal is the same as the first frame number identification received from the input node. When the second video identification is the same as the first video identification and the second frame number identification is also the same as the first frame number identification, the output node sends the video block with the first frame number identification received from the input node to the display device. In this manner, it can be effectively ensured that the video blocks received by the display device from multiple output nodes are video blocks generated by segmenting the same video frame, avoiding the sense of fragmentation when the display device displays the video image generated by splicing the video blocks received from multiple output nodes, thereby realizing the video stream synchronization.

Optionally, the video stream synchronization method further includes the following: for each output node, when the current output node determines that the first video identification is the same as the second video identification and the first frame number identification is different from the second frame number identification, a video block corresponding to the second frame number identification in the current output node is sent to the display device. Since the input node sends the message packet to the output node corresponding to each video block first, and then sends the message packet to the frame synchronization control module through the main control module, two relationships between the first frame number identification received by the output node from the input node and the second frame number identification parsed by the output node from the target frame synchronization signal sent by the frame synchronization control module exist. One relationship is that the first frame number identification is consistent with the second frame number identification, and the other relationship is that the first frame number identification is greater than the second frame number identification. When the second video identification is the same as the first video identification, while the second frame number identification is different from the first frame number identification, the output node sends the video block corresponding to the second frame number identification to the display device.

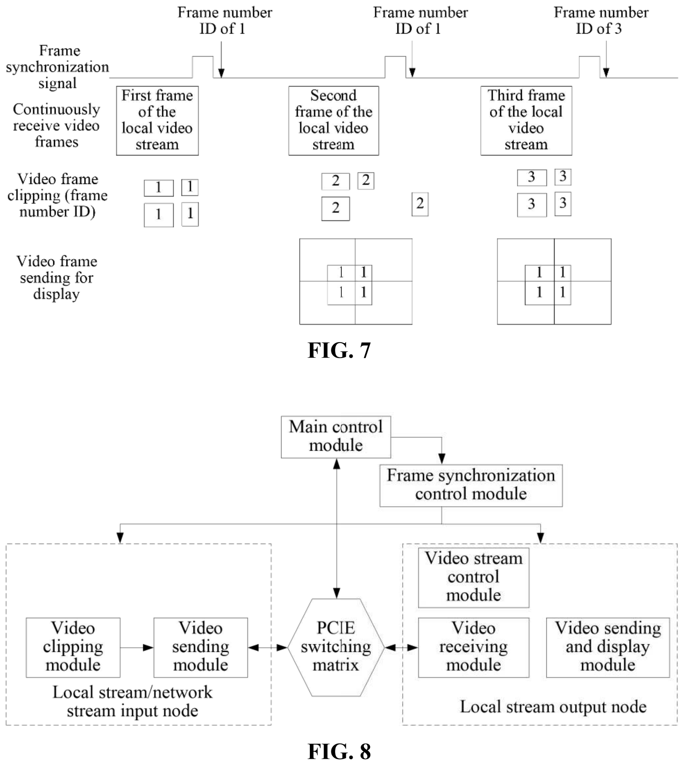

When the second video identification is the same as the first video identification and the second frame number identification is the same as the first frame number identification, the output node sends the video frame corresponding to the first frame number identification for display; that is, the video frame corresponding to the first frame number identification is displayed in the display device. When the second video identification is the same as the first video identification, while the second frame number identification is different from the first frame number identification, the output node sends the video block corresponding to the second frame number identification for display; that is, the video block corresponding to the second frame number identification is displayed in the display device. FIG. 7 is a schematic diagram of a video stream synchronization process provided by an embodiment of the present disclosure. As shown in FIG. 7, the first frame number ID of the video block received by the output node from the input node is 2, and correspondingly, the second frame number ID parsed by the output node from the target frame synchronization signal is 1, which are inconsistent. Therefore, the output node sends the video block with the second frame number ID of 1 to the display device, that is, the display device displays the video frame corresponding to the video block with the second frame number ID of 1.

The video stream synchronization method of the embodiments of the present disclosure is applied to a video stream synchronization platform. The video stream synchronization platform includes a main control module, a frame synchronization control module, an input node and output nodes. The video stream synchronization method includes the following: for each video frame in the video stream, the input node segments the current video frame to generate the at least two video blocks. For each video block, the input node transmits the current video block to the output node corresponding to the current video block, and in response to the completed transmission of the current video block, the input node sends the message packet to the output node corresponding to the current video block. The message packet includes the first video identification of the current video frame and the first frame number identification of the current video block. Multiple video frames in the same video stream have the same first video identification, and at least two video blocks generated by segmenting the same video frame have the same first video frame number identification. In response to a completed transmission of the at least two video blocks generated by segmenting the same video frame and the message packet, the input node sends the message packet to the frame synchronization control module through the main control module. In response to the message packet, the frame synchronization control module processes the initial frame synchronization signal according to the first video identification and the first frame number identification in the message packet to generate the target frame synchronization signal, and sends the target frame synchronization signal to the output nodes corresponding to the at least two video blocks respectively. For each output node, the current output node parses the target frame synchronization signal to determine the second video identification and the second frame number identification, and sends the video block corresponding to the first frame number identification in the current output node to the display device when the first video identification is the same as the second video identification and the first frame number identification is the same as the second frame number identification. Through the technical solution provided by the embodiments of the present disclosure, it can be effectively ensured that the video blocks received by the display device from multiple output nodes are the video blocks generated by segmenting the same video frame, avoiding the sense of fragmentation when the display device displays the video image generated by splicing the video blocks received from multiple output nodes, thereby realizing the video stream synchronization.

In some embodiments, the step in which for each video block, the input node transmits the current video block to the output node corresponding to the current video block includes the following: service configuration information pre-stored is acquired, where the service configuration information includes a mapping relationship between the input node and at least two output nodes; an output node having the mapping relationship with the input node is determined according to the service configuration information; and for each video block, the input node transmits the current video block to the output node corresponding to the current video block, where the output node corresponding to the current video block is an output node having the mapping relationship with the input node. Exemplarily, the input node acquires the service configuration information pre-stored, and the input node may acquire the service configuration information sent by the main control module. Exemplarily, a user may perform service configuration in the main control module. Since the video stream synchronization platform includes multiple inputs and multiple outputs, when the service configuration is performed, it may be configured that the video streams output by multiple input nodes are transmitted to which output interfaces and are displayed in which display devices through the output interfaces, thereby generating the service configuration information. Multiple output nodes for receiving the video stream transmitted by the input node are the output nodes having the mapping relationship with the input node; therefore, the service configuration information includes the mapping relationship between the input node and at least two output nodes. The input node sends the at least two video blocks generated by segmenting the video frame to the output nodes having the mapping relationship with the input node. The video blocks are in one-to-one correspondence with the output nodes.

Optionally, the service configuration information further includes a synchronous video ID of the input node. Before the input node segments the current video frame to generate the at least two video blocks for each video frame in the video stream, the video stream synchronization method further includes the following: in response to a video stream synchronization event being triggered, the main control module takes the synchronous video ID as the first video identification of multiple video frames in the video stream. Exemplarily, when the main control module performs the service configuration, a synchronous video ID may also be configured for the input node. Therefore, the service configuration information may also include the synchronous video ID of the input node. When a video stream synchronization instruction is received, the main control module sends the synchronous video ID to the input node and takes the synchronous video ID as the first video identification of multiple video frames in the video stream output by the input node. Optionally, the synchronous video ID pre-configured by the main control module may also be an 8-bit value. The synchronous video ID is assigned to the input node and used as the first video identification of the video frames in each video stream. Optionally, if the video frames in the video stream do not need to be segmented and the video stream synchronization does not need to be considered, no synchronous video ID is assigned to the input node. Alternatively, a default video ID, such as video ID of 0, is assigned to the input node.

Exemplarily, FIG. 8 is a schematic structural diagram of a video stream synchronization platform provided by an embodiment of the present disclosure. The synchronization process of a video stream may be understood in conjunction with FIG. 8 and the description of the above embodiments, and will not be repeated here.

### Embodiment two

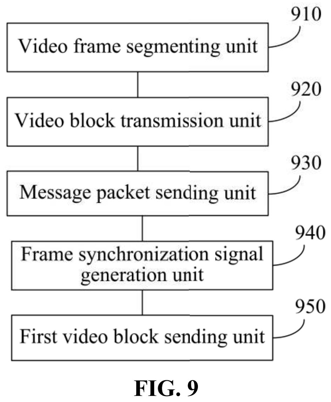

FIG. 9 is a schematic structural diagram of a video stream synchronization apparatus provided in embodiment two of the present disclosure. The video stream synchronization apparatus is applied to a video stream synchronization platform. The video stream synchronization platform includes a main control module, a frame synchronization control module, an input node and output nodes. As shown in FIG. 9, the video stream synchronization apparatus includes a video frame segmenting unit, a video block transmission unit, a message packet sending unit, a frame synchronization signal generation unit, and a first video block sending unit.

The video frame segmenting unit 910 is configured to, for each video frame in a video stream, segment a current video frame to generate at least two video blocks through the input node.

The video block transmission unit 920 is configured to, for each of the at least two video blocks, transmit a current video block to an output node corresponding to the current video block through the input node, and in response to a completed transmission of the current video block, send a message packet to the output node corresponding to the current video block. The at least two video blocks have one-to-one correspondence with at least two of the output nodes. The message packet includes a first video identification of the current video frame and a first frame number identification of the current video block. Multiple video frames in the same video stream have the same first video identification, and at least two video blocks generated by segmenting the same video frame have the same first video frame number identification.

The message packet sending unit 930 is configured to send, through the input node, the message packet to the frame synchronization control module by using the main control module in response to a completed transmission of the at least two video blocks generated by segmenting the same video frame and the message packet.

The frame synchronization signal generation unit 940 is configured to, in response to the message packet, process an initial frame synchronization signal according to the first video identification and the first frame number identification in the message packet, generate a target frame synchronization signal through the frame synchronization control module, and send the target frame synchronization signal to the output nodes corresponding to the at least two video blocks respectively.

The first video block sending unit 950 is configured to, for each of the output nodes, parse the target frame synchronization signal to determine a second video identification and a second frame number identification through a current output node, and send a video block corresponding to the first frame number identification in the current output node to a display device when the first video identification is the same as the second video identification and the first frame number identification is the same as the second frame number identification.

Optionally, the first video identification includes a first video ID;

The frame synchronization signal generation unit 940 is configured as follows:
After a preset duration delayed from a falling edge of the initial frame synchronization signal, based on a preset sequence of the first video ID, the frame synchronization control module sends a target pulse signal corresponding to the first frame number identification to the initial frame synchronization signal according to the first frame number identification corresponding to the first video ID within a preset period to generate the target frame synchronization signal.

Optionally, the video stream synchronization apparatus further includes a second video block sending unit.

The second video block sending unit is configured to, for each of the output nodes, send a video block corresponding to the second frame number identification in the current output node to the display device when the current output node determines that the first video identification is the same as the second video identification and the first frame number identification is different from the second frame number identification.

Optionally, the first frame number identification is a first frame number ID. The first frame number ID is an ID cyclically counted by a loop counter, and the first frame number ID is sequentially and cyclically counted according to a sequence of video frames in the same video stream.

Optionally, the input node includes a local stream input node and a network stream input node, and the output nodes include a local stream output node.

Optionally, the video block transmission unit 920 is configured to perform the following:

Service configuration information pre-stored is acquired. The service configuration information includes a mapping relationship between the input node and at least two output nodes.

An output node having the mapping relationship with the input node is determined according to the service configuration information.

For each video block, the input node transmits the current video block to an output node corresponding to the current video block. The output node corresponding to the current video block is the output node having the mapping relationship with the input node.

Optionally, the service configuration information further includes a synchronous video ID of the input node.

The video stream synchronization apparatus further includes a first video identification determination unit.

The first video identification determination unit is configured to, in response to a video stream synchronization event being triggered, take the synchronous video ID as the first video identification of multiple video frames in the video stream before the input node segments the current video frame to generate at least two video blocks for each video frame in the video stream.

The video stream synchronization apparatus provided by the embodiments of the present disclosure can execute the video stream synchronization method provided by any embodiment of the present disclosure, and has corresponding functional modules and beneficial effects of the execution method.

### Embodiment three

An embodiment of the present disclosure provides a video stream synchronization platform. As shown in FIG. 5, the video stream synchronization platform 500 includes a main control module 510, a frame synchronization control module 520, an input node 530 and output nodes 540.

The input node 530 is configured to segment the current video frame to generate at least two video blocks for each video frame in a video stream.

The input node 530 is further configured to, for each of the at least two video blocks, transmit a current video block to an output node 540 corresponding to the current video block, and in response to a completed transmission of the current video block, send a message packet to the output node 540 corresponding to the current video block. The at least two video blocks have one-to-one correspondence with at least two output nodes. The message packet includes a first video identification of the current video frame and a first frame number identification of the current video block. Multiple video frames in the same video stream have the same first video identification, and at least two video blocks generated by segmenting the same video frame have the same first video frame number identification.

The input node 530 is further configured to send the message packet to the frame synchronization control module 520 by using the main control module 510 in response to a completed transmission of the at least two video blocks generated by segmenting the same video frame and the message packet.

The frame synchronization control module 520 is configured to, in response to the message packet, process an initial frame synchronization signal according to the first video identification and the first frame number identification in the message packet, generate a target frame synchronization signal, and send the target frame synchronization signal to the output nodes 540 corresponding to the at least two video blocks respectively.

For each output node 540, a current output node parses the target frame synchronization signal to determine a second video identification and a second frame number identification, and sends a video block corresponding to the first frame number identification in the current output node to a display device when the first video identification is the same as the second video identification and the first frame number identification is the same as the second frame number identification.

The video stream synchronization platform 500 is intended to represent various forms of digital computers, such as laptop computers, desktop computers, workstations, personal digital assistants, servers, blade servers, mainframe computers, and other suitable computers. The video stream synchronization platform 500 can also represent various forms of mobile devices, such as a personal digital assistant, a cellular phone, a smart phone, wearable devices (such as helmets, glasses, and watches) and other similar computing devices. The components shown herein, their connections and relationships, and their functions are merely examples, and are not intended to limit the implementation of the present application described and/or claimed herein.

The computer program for implementing the method of the present application may be written in any combination of one or more programming languages. These computer programs may be provided to a processor of a general-purpose computer, a special-purpose computer or other programmable data processing apparatus, so that when the computer program is executed by the processor, the functions/operations specified in the flowcharts and/or block diagrams are implemented. The computer program may be executed entirely on a machine, partially executed on a machine, partially executed on a machine and partially executed on a remote machine as an independent software package, or executed entirely on a remote machine or server.

In the context of the present application, a computer-readable storage medium may be a tangible medium, which may contain or store a computer program for use by or in combination with an instruction execution system, apparatus or device. The computer-readable storage medium may include, an electronic, magnetic, optical, electromagnetic, infrared, or semiconductor system, apparatus or device, or any suitable combination of the foregoing. Alternatively, the computer-readable storage medium may be a machine-readable signal medium. The machine-readable storage medium may include an electrical connection based on one or more wires, a portable computer disk, a hard disk, a random access memory (RAM), a read-only memory (ROM), an erasable programmable read-only memory (EPROM), a flash memory), an optical fiber, a compact disk read-only memory (CD-ROM), an optical storage device, a magnetic storage device, or any suitable combination of the foregoing. The storage medium may be a non-transitory storage medium.

To provide interaction with a user, the systems and techniques described herein can be implemented on an video stream synchronization platform, where the video stream synchronization platform has a display device (e.g., a cathode ray tube (CRT) or liquid crystal display (LCD) monitor) for displaying information to the user; and a keyboard and a pointing device (e.g., a mouse or trackball) through which the user may provide input to the video stream synchronization platform. Other types of devices can also be used to provide interaction with the user; for example, the feedback provided to the user can be any form of sensory feedback (e.g., visual feedback, auditory feedback, or tactile feedback); and the input from the user can be received in any form (including acoustic input, voice input or tactile input).

The systems and techniques described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which a user can interact with implementations of the systems and techniques described herein), or a computing system that includes any combination of such back-end components, middleware components, or front-end components. The components of the system can be interconnected by any form or medium of digital data communication (e.g., a communication network). Examples of communication networks include: a local area network (LAN), a wide area network (WAN), a blockchain network and the Internet.

A computing system may include a client and a server. The client and server are generally far from each other and usually interact through a communication network. The relationship between client and server is generated by computer programs running on corresponding computers and having a client-server relationship. The server may be a cloud server, also known as a cloud computing server or cloud host. The cloud server is a host product in the cloud computing service system to solve the defects of large management difficulty and weak business scalability existing in physical host and virtual private server (VPS) services.

Various forms of processes shown above may be used, and steps may be reordered, added, or deleted. For example, the various steps described in the present application can be executed in parallel, sequentially or in a different order, so long as the desired result of the technical solution of the present application can be achieved, no limitation is made herein.

## Claims

1. A video stream synchronization method, being applied to a video stream synchronization platform, wherein the video stream synchronization platform comprises a main control module, a frame synchronization control module, an input node and output nodes, and the video stream synchronization method comprises:
for each video frame in a video stream, segmenting, by the input node, a current video frame to generate at least two video blocks;
for each of the at least two video blocks, transmitting, by the input node, a current video block to an output node corresponding to the current video block, and in response to a completed transmission of the current video block, sending a message packet to the output node corresponding to the current video block, wherein the at least two video blocks have one-to-one correspondence with at least two of the output nodes, the message packet comprises a first video identification of the current video frame and a first frame number identification of the current video block, a plurality of video frames in a same video stream have a same first video identification, and at least two video blocks generated by segmenting a same video frame have a same first video frame number identification;
sending, by the input node, the message packet to the frame synchronization control module through the main control module in response to a completed transmission of the at least two video blocks generated by segmenting the same video frame and the message packet;
in response to the message packet, processing, by the frame synchronization control module, an initial frame synchronization signal according to the first video identification and the first frame number identification in the message packet, generating a target frame synchronization signal and sending the target frame synchronization signal to the output nodes corresponding to the at least two video blocks respectively; and
for each of the output nodes, parsing, by a current output node, the target frame synchronization signal to determine a second video identification and a second frame number identification, and in response to the first video identification being the same as the second video identification and the first frame number identification being the same as the second frame number identification, sending a video block corresponding to the first frame number identification in the current output node to a display device.

2. The video stream synchronization method according to claim 1, wherein the first video identification comprises a first video identifier, ID; and
processing, by the frame synchronization control module, the initial frame synchronization signal according to the first video identification and the first frame number identification in the message packet to generate the target frame synchronization signal comprises:
after a preset duration delayed from a falling edge of the initial frame synchronization signal, based on a preset sequence of the first video ID, sending, by the frame synchronization control module, a target pulse signal corresponding to the first frame number identification to the initial frame synchronization signal according to the first frame number identification corresponding to the first video ID within a preset period to generate the target frame synchronization signal.

3. The video stream synchronization method according to claim 1, further comprising:
for each of the output nodes, sending, by the current output node, a video block corresponding to the second frame number identification in the current output node to the display device in response to determining that the first video identification is the same as the second video identification and the first frame number identification is different from the second frame number identification.

4. The video stream synchronization method according to claim 1, wherein the first frame number identification is a first frame number ID, the first frame number ID is an ID cyclically counted by a loop counter, and the first frame number ID is sequentially and cyclically counted according to a sequence of video frames in the same video stream.

5. The video stream synchronization method according to claim 1, wherein the input node comprises a local stream input node and a network stream input node, and the output nodes comprise a local stream output node.

6. The video stream synchronization method according to claim 1, wherein for each of the at least two video blocks, transmitting, by the input node, the current video block to the output node corresponding to the current video block comprises:
acquiring service configuration information pre-stored, wherein the service configuration information comprises a mapping relationship between the input node and at least two of the output nodes;
determining an output node having the mapping relationship with the input node according to the service configuration information; and
for each of the at least two video blocks, transmitting, by the input node, the current video block to the output node corresponding to the current video block, wherein the output node corresponding to the current video block is the output node having the mapping relationship with the input node.

7. The video stream synchronization method according to claim 6, wherein the service configuration information further comprises a synchronous video ID of the input node; and
before for each video frame in the video stream, segmenting, by the input node, the current video frame to generate the at least two video blocks, the video stream synchronization method further comprises:
in response to a video stream synchronization event being triggered, taking, by the main control module, the synchronous video ID as the first video identification of the plurality of video frames in the video stream.

8. A video stream synchronization apparatus, being applied to a video stream synchronization platform, wherein the video stream synchronization platform comprises a main control module, a frame synchronization control module, an input node and output nodes, and the video stream synchronization apparatus comprises:
a video frame segmenting unit configured to, for each video frame in a video stream, segment a current video frame to generate at least two video blocks through the input node;
a video block transmission unit configured to, for each of the at least two video blocks, transmit a current video block to an output node corresponding to the current video block through the input node, and in response to a completed transmission of the current video block, send a message packet to the output node corresponding to the current video block, wherein the at least two video blocks have one-to-one correspondence with at least two of the output nodes, the message packet comprises a first video identification of the current video frame and a first frame number identification of the current video block, a plurality of video frames in a same video stream have a same first video identification, and the at least two video blocks generated by segmenting a same video frame have a same first video frame number identification;
a message packet sending unit configured to send, by using the main control module, the message packet to the frame synchronization control module through the input node in response to a completed transmission of the at least two video blocks generated by segmenting the same video frame and the message packet;
a frame synchronization signal generation unit configured to, in response to the message packet, process an initial frame synchronization signal according to the first video identification and the first frame number identification in the message packet through the frame synchronization control module, generate a target frame synchronization signal, and send the target frame synchronization signal to the output nodes corresponding to the at least two video blocks respectively; and
a first video block sending unit configured to, for each of the output nodes, parse the target frame synchronization signal to determine a second video identification and a second frame number identification through a current output node, and in response to the first video identification being the same as the second video identification and the first frame number identification being the same as the second frame number identification, send a video block corresponding to the first frame number identification in the current output node to a display device.

9. A video stream synchronization platform, wherein the video stream synchronization platform comprises a main control module, a frame synchronization control module, an input node and output nodes; wherein
the input node is configured to, for each video frame in a video stream, segment a current video frame to generate at least two video blocks;
the input node is further configured to, for each of the at least two video blocks, transmit a current video block to an output node corresponding to the current video block, and in response to a completed transmission of the current video block, send a message packet to the output node corresponding to the current video block, wherein the at least two video blocks have one-to-one correspondence with at least two of the output nodes, the message packet comprises a first video identification of the current video frame and a first frame number identification of the current video block, a plurality of video frames in a same video stream have a same first video identification, and the at least two video blocks generated by segmenting a same video frame have a same first video frame number identification;
the input node is further configured to send the message packet to the frame synchronization control module through the main control module in response to a completed transmission of the at least two video blocks generated by segmenting the same video frame and the message packet; and
the frame synchronization control module is configured to, in response to the message packet, process an initial frame synchronization signal according to the first video identification and the first frame number identification in the message packet, generate a target frame synchronization signal, and send the target frame synchronization signal to the output nodes corresponding to the at least two video blocks respectively; wherein
for each of the output nodes, a current output node parses the target frame synchronization signal to determine a second video identification and a second frame number identification, and in response to the first video identification being the same as the second video identification and the first frame number identification being the same as the second frame number identification, sends a video block corresponding to the first frame number identification in the current output node to a display device.

10. A computer-readable storage medium, wherein the computer-readable storage medium stores computer instructions, and when being executed by a processor, the computer instructions are configured to enable the processor to implement the video stream synchronization method according to any one of claims 1 to 7.
